# EUROPÄISCHE PATENTSCHRIFT

(11) **EP 3 041 703 B1**
(45) Veröffentlichungstag und Bekanntmachung des Hinweises auf die Patenterteilung: **09.09.2020**
(21) Anmeldenummer: 14734512.8
(22) Anmeldetag: 03.07.2014
(51) Int. Cl.: B60L 53/63, B60L 53/14, B60L 53/30, B60L 53/68

(54) **SYSTEM ZUM LADEN EINES ELEKTROFAHRZEUGS, ELEKTROFAHRZEUG UND VERFAHREN**
SYSTEM FOR CHARGING AN ELECTRIC VEHICLE, ELECTRIC VEHICLE AND METHOD
SYSTÈME PERMETTANT DE CHARGER UN VÉHICULE ÉLECTRIQUE, VÉHICULE ÉLECTRIQUE ET PROCÉDÉ

(30) Priorität: 05.09.2013 DE 102013217740
(43) Veröffentlichungstag der Anmeldung: 13.07.2016
(73) Patentinhaber: Robert Bosch GmbH, 70442 Stuttgart (DE)
(72) Erfinder: FAYE, Ian, 70193 Stuttgart (DE); ECKERT, Bernd, 71665 Vaihingen An Der Enz (DE)
(86) Internationale Anmeldenummer: PCT/EP2014/064228
(87) Internationale Veröffentlichungsnummer: WO 2015/032523

(56) Entgegenhaltungen:
- WO-A1-2012/000538
- WO-A1-2012/042134
- WO-A1-2012/149965
- WO-A1-2013/111127
- DE-A1-102009 060 364

## Beschreibung

Die vorliegende Erfindung bezieht sich auf ein System zum Laden eines Elektrofahrzeugs, ein entsprechendes Elektrofahrzeug und ein Verfahren zum Laden eines Elektrofahrzeugs.

### Stand der Technik

Aus Umweltschutzgründen und auch aus Kostengründen, werden heute Möglichkeiten gesucht, den Kraftstoffverbrauch und damit auch den Schadstoffausstoß von Fahrzeugen zu reduzieren.

Eine Möglichkeit, den Kraftstoffverbrauch eines Fahrzeugs zu reduzieren, ist die Verwendung eines Hybrid-Antriebs oder eines Elektroantriebs. Solche Fahrzeuge können z.B. vor einer Fahrt an einer Steckdose geladen werden und durch einen elektrischen Antrieb angetrieben werden, bis der elektrische Energiespeicher leer ist.

Zum Laden des Energiespeichers solcher Fahrzeuge werden heute üblicherweise Ladestationen eingesetzt, die z.B. in einem Haus oder der Garage eines Besitzers des Fahrzeugs installiert werden können. Solche Ladestationen können aber auch an öffentlich zugänglichen Stellen, z.B. an Parkplätzen aufgestellt werden. So kann ein Fahrzeughalter auch während einem Einkauf oder z.B. während er in der Arbeit ist, den Energiespeicher seines Fahrzeugs laden. Das Laden kann dabei über ein Ladekabel mit Wechsel- oder Gleichstrom oder z.B. kontaktlos durch induktive Energieübertragung stattfinden. Üblicherweise steht dabei eine Ladeleistung von 3,5kW zur Verfügung.

Eine mögliche Form einer Ladestation zum konduktiven Wechselstrom-Laden mit Hilfe eines Ladekabels zeigt z.B. die DE 20 2011 103 003 U1.

Beim Laden eines solchen Fahrzeugs wird das Fahrzeug üblicherweise lediglich über eine einzelne Phase des als Drehstromnetz mit drei Phasen ausgeführten Energieversorgungsnetzes geladen.

Weiterhin zeigt DE102009060364 A1 eine Vorrichtung und ein Verfahren zur Einspeisung von elektrischer Energie eines mehrphasigen Stromnetzes in einem elektrischen Verbraucher oder Energiespeicher mittels derer Rückwirkungen auf das mehrphasige Stromnetz minimiert werden.

Für Halter von Elektrofahrzeugen ist es insbesondere in unbekannten Umgebungen nicht immer einfach, eine geeignete Ladestation für ihr Fahrzeug zu finden. Um die Suche nach einer Ladestation zu vereinfachen, können sog. Elektro-Mobilitätsdienstleister, auch "Provider" genannt, den Fahrer des jeweiligen Fahrzeugs bei der Suche nach einer freien Ladestation unterstützen. Die Provider können auch, unter Umständen gegen eine Gebühr, eine Ladestation für den Halter des Fahrzeugs reservieren.

Bei der Suche nach einer Ladestation kann der Provider z.B. eine Anwendung bereitstellen, die auf einem Smartphone des Fahrers oder auf einem Infotainment-System des Fahrzeugs betrieben wird. Die Anwendung kann z.B. über ein Telematik-System des Fahrzeugs, z.B. einen GPS-Empfänger, die Position des Fahrzeugs erfassen und den Fahrer zu der Ladestation leiten.

Üblicherweise ist die Netzebene 7 des Energieversorgungsnetzes als Drehstromsystem (z.B. 230/400 V) mit drei Phasen aufgebaut. Werden nun eine Vielzahl von Ladestationen mit diesem Drehstromsystem gekoppelt, sind die einphasigen Ladestationen im statistischen Mittel über die drei Phasen üblicherweise gleichmäßig verteilt.

Allerdings kann nicht ausgeschlossen werden, dass eine Vielzahl von Fahrzeugen in einem Netz der Netzebene 7 an genau denjenigen Ladestationen angeschlossen werden, die alle an der gleichen Phase des Drehstromnetzes angeschlossen sind.

Dies führt zu einer unsymmetrischen Belastung des Drehstromnetzes, was bis zu einem Ausfall des Netzes der Netzebene 7 oder des Niederspannungstransformators der Netzebene 6 führen kann.

Für den Fahrer eines Fahrzeugs ist an einer Ladestation nicht erkennbar, welche Last bereits auf derjenigen Phase anliegt, mit welcher sein Fahrzeug über die jeweilige Ladestation gekoppelt wird.

### Offenbarung der Erfindung

Die vorliegende Erfindung offenbart ein System zum Laden eines Elektrofahrzeugs mit den Merkmalen des Anspruchs 1, ein Elektrofahrzeug mit den Merkmalen des Anspruchs 10 und ein Verfahren mit den Merkmalen des Anspruchs 11.

### Demgemäß ist vorgesehen:

Ein System zum Laden eines Elektrofahrzeugs, mit einer Messeinrichtung, welche dazu ausgebildet ist, eine Ladespannung an einer Ladeschnittstelle des Elektrofahrzeugs zu messen, mit einer Auswerteeinrichtung, welche dazu ausgebildet ist, aus der gemessenen Ladespannung erste charakteristische Größen zu bestimmen, einer Kommunikationseinrichtung, welche dazu ausgebildet ist, die ersten charakteristischen Größen an weitere Elektrofahrzeuge zu übermitteln und/oder von den weiteren Elektrofahrzeugen zweite charakteristische Größen zu Ladespannungen der weiteren Elektrofahrzeuge zu empfangen, mit einer Steuereinrichtung, welche dazu ausgebildet ist, in Abhängigkeit von den ersten und/oder zweiten charakteristischen Größen die von dem Elektrofahrzeug über die Ladeschnittstelle aus einem Energieversorgungsnetz entnommene Ladeleistung zu steuern.

### Ferner ist vorgesehen:

Ein Elektrofahrzeug mit einer Ladeschnittstelle und mit einer Ladevorrichtung für ein Elektrofahrzeug, welche ein erfindungsgemäßes System aufweist.

### Schließlich ist vorgesehen:

Ein Verfahren zum Laden eines Elektrofahrzeugs, mit den Schritten Messen einer Ladespannung an einer Ladeschnittstelle des Elektrofahrzeugs, Bestimmen erste charakteristischer Größen aus der gemessene Ladespannung, Übermitteln der ersten charakteristischen Größen an weitere Elektrofahrzeuge; und/oder Empfangen von zweiten charakteristische Größen zu Ladespannungen der weiteren Elektrofahrzeuge von den weiteren Elektrofahrzeugen, Steuern der von dem Elektrofahrzeug über die Ladeschnittstelle aus einem Energieversorgungsnetz entnommenen Ladeleistung in Abhängigkeit von den ersten und/oder zweiten charakteristischen Größen.

### Vorteile der Erfindung

Die der vorliegenden Erfindung zu Grunde liegende Erkenntnis besteht darin, dass der Fahrer eines Elektrofahrzeugs selbst nicht für eine Reduzierung der Netzlast bzw. eine Symmetrierung der Netzlast sorgen kann, wenn er sein Elektrofahrzeug an einer Ladestation auflädt.

Die der vorliegenden Erfindung zu Grunde liegende Idee besteht nun darin, dieser Erkenntnis Rechnung zu tragen und eine Möglichkeit vorzusehen, die Belastung einer Phase des Energieversorgungsnetzes automatisch zu reduzieren, wenn diese durch das Laden einer Vielzahl von Elektrofahrzeugen überlastet wird.

Dazu sieht die vorliegende Erfindung insbesondere vor, dass Elektrofahrzeuge über ein System zum Laden des jeweiligen Elektrofahrzeugs verfügen, welches eine Abstimmung des Ladevorgangs zwischen den einzelnen Elektrofahrzeugen ermöglicht.

Dazu sieht die vorliegende Erfindung vor, dass in einem Elektrofahrzeug erste charakteristische Größen einer Ladespannung bestimmt werden. Diese ersten charakteristischen Größen werden daraufhin weiteren Elektrofahrzeugen mitgeteilt. Ebenso werden zweite charakteristische Größen von den weiteren Elektrofahrzeugen empfangen.

Ausserdem sieht die vorliegende Erfindung vor, dass in Abhängigkeit von den ersten charakteristischen Größen und den zweiten charakteristischen Größen die Ladeleistung gesteuert wird, die das Elektrofahrzeug über eine Ladeschnittstelle aus dem Energieversorgungsnetz entnimmt.

Damit ermöglicht es die vorliegende Erfindung, dass eine Vielzahl von Elektrofahrzeugen in einem Drehstromnetz der Netzebene 7 nebeneinander geladen werden können, ohne dass es zu einer Überlastung des Drehstromnetzes kommt. Insbesondere ist dabei kein Eingreifen eines Benutzers oder eines Betreiberpersonals der Ladestationen notwendig.

Bei der vorliegenden Erfindung weisen die ersten und/oder zweiten charakteristischen Größen zumindest die Phasenlage der Ladespannung auf. Dies ermöglicht einen einfachen Vergleich der Ladespannungen des Elektrofahrzeugs und der weiteren Elektrofahrzeuge.

Schliesslich ist bei der vorliegenden Erfindung die Steuereinrichtung dazu ausgebildet, basierend auf der Phasenlage zu bestimmen, ob das Elektrofahrzeug und mindestens eines der weiteren Elektrofahrzeuge mit der gleichen elektrischen Phase des Energieversorgungsnetzes gekoppelt sind. Da in Energieversorgungsnetzen üblicherweise drei Phasen mit einem Phasenwinkel von 0°, 120° und 240° vorhanden sind, kann dies durch einen einfachen Vergleich der Phasenlage, eventuell mit Einbeziehung eines Toleranzbereichs, sehr einfach festgestellt werden.

Vorteilhafte Ausführungsformen und Weiterbildungen ergeben sich aus den Unteransprüchen sowie aus der Beschreibung unter Bezugnahme auf die Figuren.

J In einer Ausführungsform ist die Steuereinrichtung dazu ausgebildet, die entnommene Ladeleistung in Abhängigkeit von der Anzahl der mit der gleichen Phase des Energieversorgungsnetzes gekoppelten weiteren Elektrofahrzeuge zu steuern. So kann sehr einfach eine Überlastung der jeweiligen Phase des Energieversorgungsnetzes verhindert werden. In einer Ausführungsform weisen die ersten und/oder zweiten charakteristischen Größen den Betrag der Ladespannung auf. Dies ermöglicht eine sehr einfache Bestimmung der Last des Energieversorgungsnetzes, da dessen Nennspannung bzw. der Nennbetrag der Netzspannung bekannt ist.

In einer Ausführungsform ist die Steuereinrichtung dazu ausgebildet, die entnommene Ladeleistung in Abhängigkeit von dem Betrag der Ladespannung zu steuern. Sinkt die Ladespannung z.B. von dem Nennbetrag unter einen vorgegebenen Schwellwert, ist davon auszugehen, dass das Energieversorgungsnetz an der Grenze seiner Belastbarkeit betrieben wird. Die Auswertung des Betrags der Ladespannung stellt also eine sehr einfache Möglichkeit dar, eine drohende Überlastung des Energieversorgungsnetzes zu erkennen.

In einer Ausführungsform ist die Kommunikationseinrichtung als eine kabellose Kommunikationseinrichtung ausgebildet. Dies ermöglicht es, eine sehr flexible Kommunikation zwischen dem Elektrofahrzeug und weiteren Elektrofahrzeugen aufzubauen.

In einer Ausführungsform ist die Kommunikationseinrichtung dazu ausgebildet eine lokale ad-hoc Kommunikation zwischen dem Elektrofahrzeug und weiteren Elektrofahrzeugen aufzubauen. Dadurch können weitere Elektrofahrzeuge dynamisch in die Kommunikation eingebunden werden, wenn diese z.B. in einen relevanten räumlichen Bereich eintreten oder wenn diese z.B. in die Reichweite der kabellosen Kommunikationsschnittstelle gelangen.

In einer Ausführungsform ist die Kommunikationseinrichtung dazu ausgebildet eine Server-basierte Kommunikation zwischen dem Elektrofahrzeug und weiteren Elektrofahrzeugen aufzubauen. Dies ermöglicht eine sehr einfache Organisation der Kommunikation, da einzelne Elektrofahrzeuge lediglich mit dem Server kommunizieren müssen.

In einer Ausführungsform weist die Kommunikationseinrichtung eine WLAN-Schnittstelle, eine GSM-Schnittstelle, eine UMTS-Schnittstelle, eine DSRC-(Dedicated Short Range Communication)-Schnittstelle oder dergleichen auf. Dies ermöglicht es, das System flexibel an unterschiedliche Anforderungen anzupassen.

In einer Ausführungsform weist die Kommunikationseinrichtung eine Datenschnittstelle auf, welche dazu ausgebildet ist, die Kommunikationseinrichtung mit einer Kommunikationsschnittstelle des Elektrofahrzeugs, insbesondere einer WLAN-Schnittstelle, einer GSM-Schnittstelle, einer UMTS-Schnittstelle, einer DSRC-(Dedicated Short Range Communication)-Schnittstelle oder dergleichen zu koppeln. Dies ermöglicht es Kommunikationsmittel zu nutzen, die bereits in dem Elektrofahrzeug vorhanden sind. So kann eine Redundanz vermieden werden und damit die Komplexität des Systems gesenkt werden.

In einer Ausführungsform ist die Steuereinrichtung dazu ausgebildet, einen möglichen Abfahrtszeitpunkt des Elektrofahrzeugs und/oder eine für das Elektrofahrzeug benötigte Reichweite über die Kommunikationseinrichtung an weitere Elektrofahrzeuge zu übermitteln und über die Kommunikationseinrichtung mögliche Abfahrtszeitpunkte der weiteren Elektrofahrzeuge und/oder für die weiteren Elektrofahrzeuge benötigte Reichweiten zu empfangen. Dadurch wird es möglich, unter den Elektrofahrzeugen Informationen dazu auszutauschen, welche Energiemenge ein Fahrzeug innerhalb welcher Zeit laden müsste, um die Wünsche des Fahrers des jeweiligen Elektrofahrzeugs zu erfüllen.

In einer Ausführungsform ist die Steuereinrichtung dazu ausgebildet, in Abhängigkeit der möglichen Abfahrtszeitpunkte des Elektrofahrzeugs und der weiteren Elektrofahrzeuge und/oder einer erforderlichen Reichweite für das Elektrofahrzeug und die weiteren Elektrofahrzeuge eine Priorisierung der Elektrofahrzeuge durchzuführen und die entnommene Ladeleistung in Abhängigkeit von der Priorisierung zu steuern. So kann sichergestellt werden, dass die Wünsche der Fahrer der Elektrofahrzeuge bestmöglich erfüllt werden und das Elektrofahrzeug zu der gewünschten Zeit die vorgegebene Menge an elektrischer Energie geladen hat.

In einer Ausführungsform ist die Steuereinrichtung dazu ausgebildet, eine Position des Elektrofahrzeugs zu bestimmen und die ersten und/oder zweiten charakteristischen Größen über die Kommunikationseinrichtung lediglich mit weiteren Elektrofahrzeugen auszutauschen, die sich innerhalb eines vorgegebenen Radius um das Elektrofahrzeug befinden. Dadurch wird sichergestellt, dass die Steuerung der Ladeleistung lediglich anhand von Daten ausgeführt wird, die von Fahrzeugen stammen, welche mit dem gleichen Netz der Netzebene 7 des jeweiligen Energieversorgungsnetzes verbunden sind.

In einer Ausführungsform weist das System eine Positionsbestimmungseinrichtung, insbesondere ein GPS-System oder dergleichen, auf, um die Position des Elektrofahrzeugs zu bestimmen. Dies ermöglicht eine sehr einfache Bestimmung der Position des Elektrofahrzeugs.

In weiteren Ausführungsformen ist die Positionsbestimmungseinrichtung als eine Mobilfunk-basierte Positionsbestimmungseinrichtung ausgebildet. In weiteren Ausbildungsformen kann z.B. auch eine manuelle Positionseingabe durch den Fahrer oder ein Positionsübermittlung von der Ladestation an das Elektrofahrzeug vorgesehen sein.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird dabei der Fachmann auch Einzelaspekte als Verbesserungen oder Ergänzungen zu der jeweiligen Grundform der vorliegenden Erfindung hinzufügen.

### Kurze Beschreibung der Zeichnungen

Die vorliegende Erfindung wird nachfolgend anhand der in den schematischen Figuren der Zeichnungen angegebenen Ausführungsbeispiele näher erläutert. Es zeigen dabei:
- Fig. 1: ein Blockschaltbild einer Ausführungsform eines erfindungsgemäßen Systems;
- Fig. 2: ein Blockschaltbild einer Ausführungsform eines erfindungsgemäßen Elektrofahrzeugs;
- Fig. 3: ein Ablaufdiagramm einer Ausführungsform eines erfindungsgemäßen Verfahrens;
- Fig. 4: ein weiteres Ablaufdiagramm einer Ausführungsform eines erfindungsgemäßen Verfahrens;
- Fig. 5: eine Darstellung von Elektrofahrzeugen an Ladestationen;
- Fig. 6: eine weitere Darstellung von Elektrofahrzeugen an Ladestationen.

In allen Figuren sind gleiche bzw. funktionsgleiche Elemente und Vorrichtungen - sofern nichts anderes angegeben ist - mit denselben Bezugszeichen versehen worden.

Unter einem Elektrofahrzeug ist im Rahmen dieser Patentanmeldung jedes Fahrzeug zu verstehen, dass einen elektrischen Antrieb aufweist, der das Fahrzeug antreibt. Dabei kann das Fahrzeug lediglich einen oder mehrere elektrische Motoren aufweisen oder eine Kombination aus einem oder mehreren elektrischen Motoren und einem weiteren Antrieb, z.B. einem Verbrennungsmotor, aufweisen.

Unter einer Messeinrichtung ist im Rahmen dieser Patentanmeldung jede Einrichtung zu verstehen, die dazu ausgebildet ist, die Ladespannung an der Ladeschnittstelle zu erfassen. Dies kann z.B. ein einfaches Widerstandsnetzwerk bzw. ein Shunt-Widerstand sein, welche an der Steuereinrichtung angeschlossen sind. Andere Ausführungen sind ebenfalls möglich.

Unter einer Auswerteeinrichtung ist eine Einrichtung zu verstehen, die die charakteristischen Größen aus der erfassten Ladespannung extrahieren kann. Dies kann z.B. mittels einer analoge Schaltung erfolgen. Die charakteristischen Größen können aber auch in der Steuereinrichtung oder einer anderen Recheneinrichtung durch ein Computerprogramm berechnet werden.

Die charakteristischen Größen können eine Vielzahl von aus der Ladespannung ableitbaren Größen darstellen. Insbesondere weisen die charakteristischen Größen z.B. den Betrag der Ladespannung, die Phasenlage der Ladespannung, die Frequenz der Ladespannung und dergleichen auf.

Die Ladespannung bezeichnet im Rahmen dieser Patentanmeldung diejenige Wechselspannung, die das Energieversorgungsnetz über eine Ladestation dem Elektrofahrzeug zum Aufladen des Energiespeichers bereitstellt.

Unter einer Ladeschnittstelle ist eine Schnittstelle zu verstehen, über die das Elektrofahrzeug mit der Ladestation gekoppelt werden kann. Die Ladeschnittstelle kann dabei z.B. eine kabelgebundene Ladeschnittstelle sein.

Die Phasenlage bezeichnet die Lage einer elektrischen Phase, über welche die Ladeschnittstelle mit elektrischer Energie versorgt wird. Die Phasenlage kann gegenüber einem festen Referenzzeitpunkt erfasst werden. Dabei kann der Referenzzeitpunkt z.B. aus einem GPS-Signal gewonnen werden. Die Phasenlage kann aber auch gegenüber einer zwischen den Elektrofahrzeugen durch die Kommunikationseinrichtung vereinbarten Zeitbasis erfasst werden.

Unter einem Energieversorgungsnetz wird ein elektrisches Versorgungsnetz verstanden, welches dazu ausgebildet ist, elektrische Energie von dem Energieerzeuger, z.B. einem Kraftwerk oder einer Solaranlage, über eine Vielzahl von Netzebenen, üblicherweise sind 7 Netzebenen vorgesehen, zu der Ladestation zu übermitteln, über welche das Elektrofahrzeug geladen wird.

Eine lokale ad-hoc Kommunikation bezeichnet eine Kommunikation, bei welcher die Teilnehmer der Kommunikation sich selbst organisieren. D.h. Teilnehmer können dynamisch die Kommunikation verlassen und neue Teilnehmer können jederzeit der Kommunikation beitreten. Dabei kann die lokale ad-hoc Kommunikation z.B. vorsehen, dass Teilnehmer der Kommunikation nur direkt miteinander kommunizieren können. Es kann aber auch vorgesehen sein, dass einzelne Teilnehmer als Router fungieren können, die Daten von einem Kommunikationsteilnehmer zu einem weiteren Kommunikationsteilnehmer weiterleiten können. Ein Fahrzeug, welches mit anderen Fahrzeugen kommuniziert sieht sich selbst dabei im Mittelpunkt und ist mit seiner Kommunikation dabei durch die Grenzen der zur Verfügung stehenden Kommunikationsmittel begrenzt.

Unter einer Server-basierten Kommunikation ist eine Kommunikation zu verstehen, bei welcher jeder der Teilnehmer mit einem zentralen Server oder einer Vielzahl von Servern kommuniziert, welche die Kommunikationsdaten zwischen den Kommunikationsteilnehmern weiterleiten.

### Ausführungsformen der Erfindung

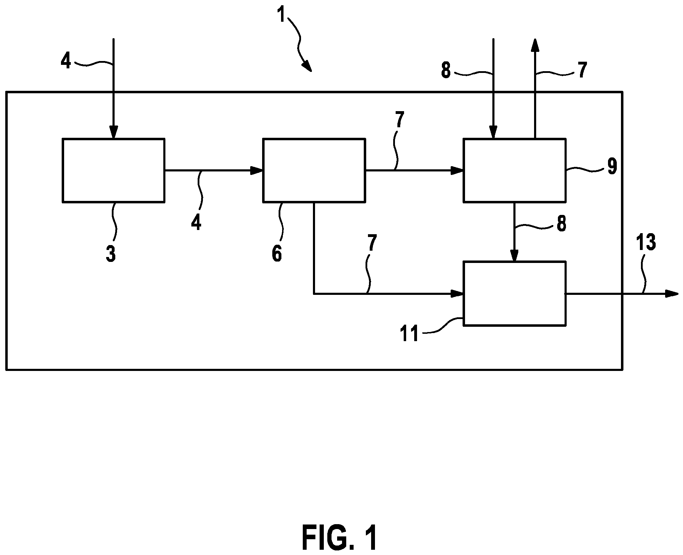

Fig. 1 zeigt ein Blockschaltbild einer Ausführungsform eines erfindungsgemäßen Systems 1 zum Laden eines Elektrofahrzeugs 2.

Das System 1 in Fig. 1 weist eine Messeinrichtung 3 auf, die mit der Auswerteeinrichtung 6 gekoppelt ist. Die Auswerteeinrichtung 6 ist mit der Kommunikationseinrichtung 9 und der Steuereinrichtung 11 gekoppelt.

Die Messeinrichtung 3 misst eine Ladespannung 4 an einer Ladeschnittstelle 5 des Elektrofahrzeugs 2 und übermittelt die gemessene Ladespannung 4a an die Auswerteeinrichtung 6.

Die Auswerteeinrichtung 6 bestimmt aus der gemessenen Ladespannung 4a erste charakteristische Größen 7 und stellt diese der Kommunikationseinrichtung 9 sowie der Steuereinrichtung 11 bereit.

Die Kommunikationseinrichtung 9 übermittelt die ersten charakteristischen Größen 7 an weitere Elektrofahrzeuge 10-n (10-1 - 10-12) und empfängt von diesen zweite charakteristische Größen 8, die die Kommunikationseinrichtung 9 der Steuereinrichtung 11 übermittelt.

Die Steuereinrichtung 11 ist dazu ausgebildet, eine Ladeleistung 13 basierend auf den ersten und zweiten charakteristischen Größen 7 und 8 zu steuern. Dabei kann die Steuereinrichtung 11 z.B. einer Leistungselektronik des Elektrofahrzeugs 2 einen Steuerbefehl oder einen Leistungswert übermitteln, der die gewünschte Ladeleistung 13 kennzeichnet. Basierend auf den ersten charakteristischen Größen 7 und den zweiten charakteristischen Größen 8 kann die Steuereinrichtung 11 berechnen bzw. schätzen, wie stark das Energieversorgungsnetz 12 durch das Laden des Elektrofahrzeugs 1 und der weiteren Elektrofahrzeuge 10-n (10-1 - 10-12) belastet wird. Stellt die Steuereinrichtung 11 fest, dass die genutzte Phase des Energieversorgungsnetzes 12 bereits stark belastet ist, kann die Steuereinrichtung z.B. eine geringere Ladeleistung 13 vorsehen, als die Leistungselektronik des Elektrofahrzeugs 1 maximal übertragen bzw. der Energiespeicher (beispielsweise die Batterie) aufnehmen kann.

Dadurch, dass das Elektrofahrzeug 1 mit den weiteren Elektrofahrzeugen 10-n (10-1 -10-12 kommunizieren kann, ohne dass ein Fahrer des Elektrofahrzeugs 1 dazu aktiv in den Ladevorgang eingreifen muss, kann der Prozess der Leistungsanpassung automatisch von der Steuereinrichtung 11 durchgeführt werden.

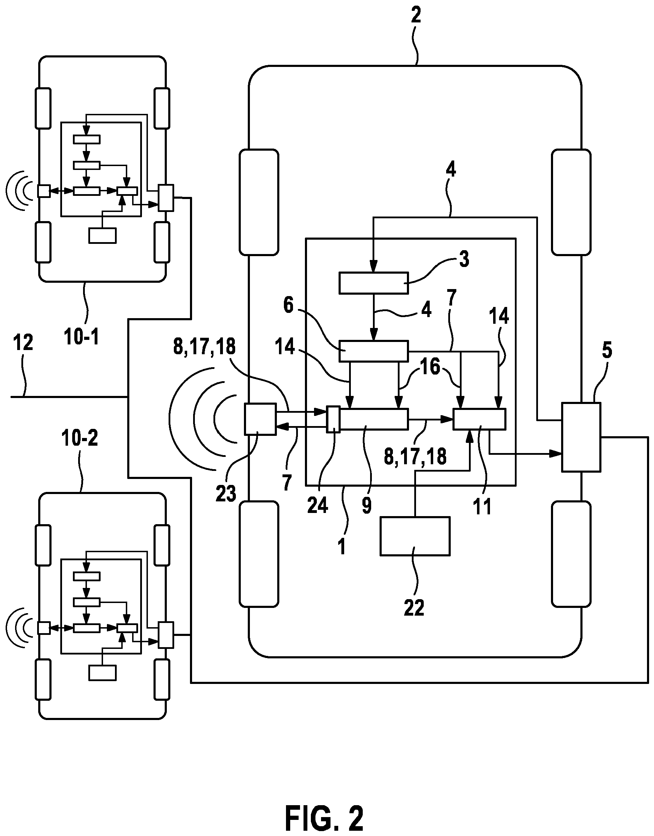

Fig. 2 zeigt ein Blockschaltbild einer Ausführungsform eines erfindungsgemäßen Elektrofahrzeugs 2.

In Fig. 2 sind neben dem Elektrofahrzeug 2 noch zwei Elektrofahrzeuge 10-1 und 10-2 dargestellt. Jedes der Elektrofahrzeuge 2, 10-1 und 10-2 weist dabei ein erfindungsgemäßes System 1 zum Laden eines Elektrofahrzeugs auf, wobei der Übersichtlichkeit halber lediglich in dem Elektrofahrzeug 2 Bezugszeichen eingezeichnet sind. Die lediglich schematisch dargestellten Systeme 1 der weiteren Elektrofahrzeuge 10-1 und 10-2 sind ferner vereinfacht dargestellt, sind aber dem System 1 des Elektrofahrzeugs 2 gleichwertig.

Die drei Elektrofahrzeuge 2, 10-1 und 10-2 sind jeweils über eine Ladeschnittstelle 5 mit dem Energieversorgungsnetz 12 gekoppelt. Insbesondere können die Elektrofahrzeuge 2, 10-1 und 10-2 jeweils über eine Ladestation 21-1 - 21-20 mit dem Energieversorgungsnetz 12 gekoppelt werden.

Handelt es sich bei dem Energieversorgungsnetz 12 z.B. um ein Drehstromnetz 12, welches drei elektrische Phasen 15-1 - 15-3 aufweist, können in Abhängigkeit von der jeweiligen Ladestation 21-2 - 21-20 die Elektrofahrzeuge 2, 10-1 und 10-2 mit einer der Phasen des Energieversorgungsnetzes 12 gekoppelt werden. Es ist dabei möglich, dass die Elektrofahrzeuge 2, 10-1 und 10-2 mit der gleichen elektrischen Phase 15-1 - 15-3 gekoppelt werden und damit die gleiche elektrische Phase 15-1 - 15-3 belasten, wenn sie geladen werden.

Das System 1 zum Laden eines Elektrofahrzeugs der Fig. 2 basiert auf dem System 1 zum Laden eines Elektrofahrzeugs der Fig. 1 und unterscheidet sich von diesem dahingehend, dass die Auswerteeinrichtung 6 dazu ausgebildet ist, als die ersten charakteristischen Größen 7 eine Phasenlage 14 und einen Betrag 16 der Ladespannung 4 zu bestimmen. Ferner weist die Kommunikationseinrichtung 9 eine Datenschnittstelle 24 auf, die mit einer Kommunikationsschnittstelle 23 des Elektrofahrzeugs 1 gekoppelt ist. Ferner ist die Steuereinrichtung 11 mit einem GPS-Empfänger 22 des Elektrofahrzeugs 2 gekoppelt.

Schließlich ist die Kommunikationseinrichtung 9 dazu ausgebildet, über die Kommunikationsschnittstelle 23 von weiteren Elektrofahrzeugen 10-1, 10-2 einen möglichen Abfahrtszeitpunkt 17 und eine erforderliche Reichweite 18 des jeweiligen Elektrofahrzeugs 10-1, 10-2 zu empfangen und an die Steuereinrichtung 11 weiterzuleiten.

In Fig. 2 nicht dargestellt ist eine Eingabevorrichtung, welche dazu ausgebildet ist, von dem Fahrer des Elektrofahrzeugs 2 ein Ziel und einen möglichen Abfahrtszeitpunk 17 für eine nächste Fahrt des Elektrofahrzeugs 2 abzufragen. Aus dem Ziel kann die Steuereinrichtung 11 die Entfernung und damit die erforderliche Reichweite 18 für die Fahrt berechnen. Ist die erforderliche Reichweite 18 bekannt, kann die Steuereinrichtung auch den erforderlichen Mindest-Ladezustand der Fahrzeugbatterie des Elektrofahrzeugs 2 berechnen und die Ladeleistung 13 entsprechend anpassen.

Die Steuereinrichtung 11 kann über den GPS-Empfänger 22 die Position des Elektrofahrzeugs 1 erfassen und daraufhin lediglich mit weiteren Elektrofahrzeugen 10-1, 10-2 kommunizieren, die sich innerhalb eines bestimmten Radius 20 um das Elektrofahrzeug 2 befinden. So kann sichergestellt werden, dass die Anpassung der Ladeleistung 13 basierend auf den zweiten charakteristischen Größen 8 durchgeführt wird, die von weiteren Elektrofahrzeugen 10-1, 10-2 stammen, die mit demselben Energieversorgungsnetz 12 gekoppelt sind, wie das Elektrofahrzeug 2.

Handelt es sich bei dem Energieversorgungsnetz 12 um ein Drehstromnetz 12 mit drei elektrischen Phasen 15-1 - 15-3, kann die Steuereinrichtung 11 basierend auf der Phasenlage 14 der Ladespannung 4 des Elektrofahrzeugs 2 und basierend auf der Phasenlage 14 der Ladespannungen 4 der weiteren Elektrofahrzeuge 10-1, 10-2 feststellen, ob diese über die gleiche elektrische Phase 15-1 - 15-3 mit elektrischer Energie versorgt werden, wie das Elektrofahrzeug 2.

Die Steuereinrichtung kann ferner anhand des Betrags der Ladespannung 4 feststellen, ob das Energieversorgungsnetz 12 überlastet ist oder kurz vor einer Überlastung steht. Beispielsweise ist ein Absinken der Ladespannung 4 unter den Nennbetrag der Spannung des Energieversorgungsnetzes 12 ein Hinweis auf eine Überlastung.

Ist nun eine Information darüber verfügbar, wie viele Elektrofahrzeuge 2, 10-1, 10-2 mit der gleichen elektrischen Phase 15-1 - 15-3 gekoppelt sind, können die Steuereinrichtungen 11 der Elektrofahrzeuge 2, 10-1, 10-2 die Lastverteilung zwischen den einzelnen Elektrofahrzeuge 2, 10-1, 10-2 aktiv steuern.

Beispielsweise kann jedes der Elektrofahrzeuge 2, 10-1, 10-2 die Ladeleistung 13 reduzieren. Dies kann aber auch dazu führen, dass nicht die maximal mögliche Leistung aus dem Energieversorgungsnetz 12 entnommen wird. Es ist daher auch möglich, dass lediglich eines oder einige der Elektrofahrzeuge 2, 10-1, 10-2 die Ladeleistung 13 reduzieren.

Haben die Fahrer zumindest eines der Elektrofahrzeuge 2, 10-1, 10-2 eine mögliche Abfahrtszeit 17 und eine erforderliche Reichweite 18 für ihre jeweiligen nächsten Fahrten angegeben, können die Steuereinrichtungen 11 der Elektrofahrzeuge 2, 10-1, 10-2 eine Priorisierung des Ladevorgangs vornehmen.

So kann z.B. eines der Elektrofahrzeuge 2, 10-1, 10-2, dessen Fahrer sehr schnell wieder mit dem jeweiligen Elektrofahrzeug 2, 10-1, 10-2 fahren will, eine hohe Ladedringlichkeit und damit eine hohe Priorität erhalten. Ebenso kann ein Fahrzeug, dessen Fahrer eine sehr lange Strecke mit dem jeweiligen Elektrofahrzeuge 2, 10-1, 10-2 zurücklegen will, ebenfalls eine hohe Priorität erhalten.

Die Steuereinrichtung 11 kann in einer Ausführungsform zu jedem weiteren Elektrofahrzeug 10-1, 10-2 in einer Tabelle Daten ablegen. Dabei können die Daten z.B. die Entfernung zu dem jeweiligen weiteren Elektrofahrzeug 10-1, 10-2, die Dringlichkeit des Ladens für das jeweilige weitere Elektrofahrzeug 10-1, 10-2, die aktuelle Ladeleistung des jeweiligen weiteren Elektrofahrzeugs 10-1, 10-2, die dem jeweiligen weiteren Elektrofahrzeug 10-1, 10-2 von der Steuereinrichtung 11 zugewiesene Priorität und einen Zeitstempel aufweisen, der die Zeit kennzeichnet, zu welcher die Daten zu dem jeweiligen Elektrofahrzeug 10-1, 10-2 empfangen bzw. gespeichert wurden.

Die Tabelle kann z.B. folgendermaßen aussehen:

| ID | Distanz in m | Dringlichkeit | Ladeleistung in kW | Priorität | Zeitstempel |
|---|---|---|---|---|---|
| 2 | 0 | 5 | 3,5 | 1 | 13:13:01 |
| 10-1 | 17 | 2 | 1 | 2 | 13:17:37 |
| 10-2 | 32 | 1 | 0.5 | 3 | 12:54:09 |

In der dargestellten Tabelle hat die Steuereinrichtung 11 des Elektrofahrzeugs 2 auch die Daten für das Elektrofahrzeug 2 selbst abgelegt. Zusätzlich sind die Daten zu den weiteren Elektrofahrzeugen 10-1, 10-2 abgelegt. Aus der Tabelle ergibt sich, dass das Elektrofahrzeug 2 sehr dringend geladen werden muss (Dringlichkeit 5) und daher die volle Ladeleistung 13 von 3,5kW erhält. Das weitere Elektrofahrzeug 10-1 befindet sich in einer Entfernung von 17m zu dem Elektrofahrzeug 2 und benötigt eine Ladung weniger dringend (Dringlichkeit 2). Folglich erhält es lediglich eine geringere Ladeleistung 13 von 1 kW. Schließlich befindet sich das weitere Elektrofahrzeug 10-2 in einer Entfernung von 32m zu dem Elektrofahrzeug 1 und erhält auf Grund der geringen Dringlichkeit von 1 lediglich 0,5kW Ladeleistung 13.

In einer Ausführungsform kann die Tabelle auch die ersten charakteristischen Größen 7 und die zweiten charakteristischen Größen 8 aufweisen. Ferner kann die Tabelle auch Einträge für weitere Elektrofahrzeuge enthalten, die nicht innerhalb der Kommunikationsreichweite der Kommunikationseinrichtung 9 liegen. Diese Daten können z.B. über weitere Elektrofahrzeuge 10-1, 10-2 erhalten werden, die diese Daten als Router weiterleiten.

Somit kann eine Fläche in der Nachbarschaft der beteiligten Elektrofahrzeuge 2, 10-1, 10-2 automatisiert abgedeckt werden. Dabei wird die abgedeckte Fläche durch die Grenzen der eingesetzten Kommunikationsmittel (z.B. Reichweite) begrenzt. die Fläche kann dabei so weit ausgedehnt werden, bis benachbarte Fahrzeuge so weit auseinander liegen, dass sie nicht mehr miteinander kommunizieren können.

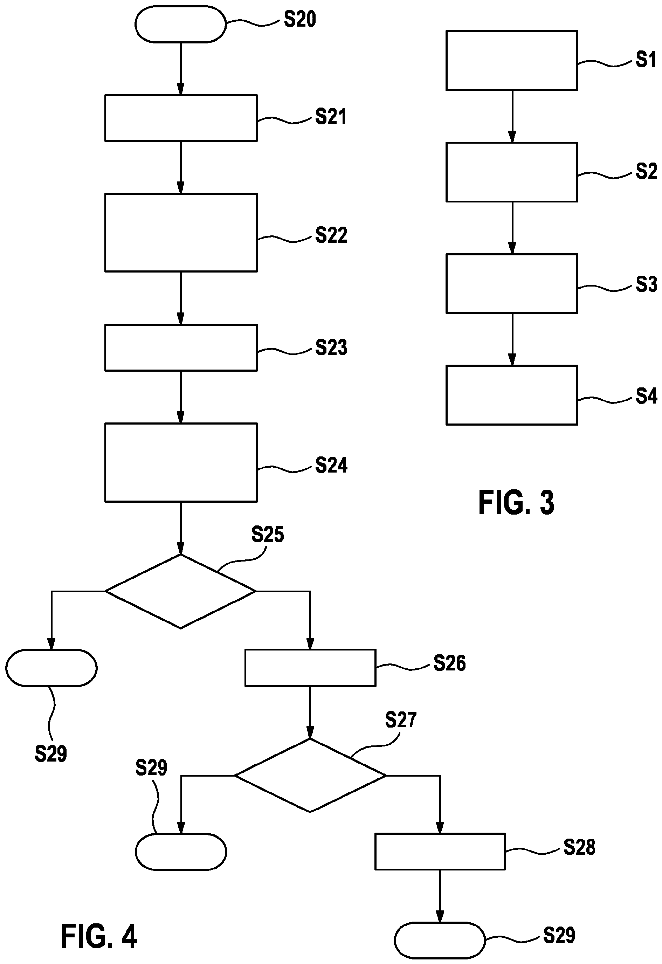

Fig. 3 zeigt ein Ablaufdiagramm einer Ausführungsform eines erfindungsgemäßen Verfahrens.

Das Verfahren sieht in einem ersten Schritt S1 das Messen einer Ladespannung 4 an einer Ladeschnittstelle 5 des Elektrofahrzeugs 2 vor.

Ferner ist in einem zweiten Schritt S2 das Bestimmen erster charakteristischer Größen 7 aus der gemessene Ladespannung 4 vorgesehen.

In einem dritten Schritt S3 werden die ersten charakteristischen Größen 7 an weitere Elektrofahrzeuge 10-1 - 10-12 übermittelt. Zusätzlich oder alternativ werden in dem dritten Schritt S3 zweite charakteristische Größen 8 zu Ladespannungen 4 der weiteren Elektrofahrzeuge 10-n (10-1 - 10-12von den weiteren Elektrofahrzeugen 10-n (10-1 - 10-12 empfangen.

Schließlich ist in einem vierten Schritt S4 das Steuern der von dem Elektrofahrzeug 2 über die Ladeschnittstelle 5 aus einem Energieversorgungsnetz 12 entnommene Ladeleistung 13 in Abhängigkeit von den ersten und/oder zweiten charakteristischen Größen 7 8 vorgesehen.

In einer Ausführungsform des Verfahrens können die ersten charakteristischen Größen 7 und die zweiten charakteristischen Größen 8 zumindest die Phasenlage 14 der jeweiligen Ladespannung 4 und den Betrag 16 der jeweiligen Ladespannung 4 aufweisen.

Mit Hilfe der Phasenlage 14 kann festgestellt werden, ob die weiteren Elektrofahrzeuge 10-1, 10-2 über die gleiche elektrische Phase 15-1 - 15-3 des Energieversorgungsnetzes 12 geladen werden. Ferner kann über den Betrag 16 der jeweiligen Ladespannung 4 festgestellt werden, ob das Energieversorgungsnetz 12 überlastet ist oder kurz vor einer Überlastung steht. Wie dies erfolgen kann wurde bereits oben beschrieben. Es sei hier auf die obigen Ausführungen verwiesen.

Werden weitere Elektrofahrzeuge 10-1, 10-2 über die gleiche elektrische Phase 15-1 - 15-3 mit elektrischer Energie versorgt und liegt der Betrag 16 der Ladespannung 4 unter einem Schwellwert, kann die Ladeleistung 13 reduziert werden, um das Energieversorgungsnetz 12 zu entlasten.

Das Verfahren kann in einer Ausführungsform vorsehen, dass lediglich mit denjenigen weiteren Elektrofahrzeugen 10-1, 10-2 Informationen ausgetauscht werden, die in einem gewissen Radius 20 um das Elektrofahrzeug 1 befindlich sind. Da Netze der Netzebene 7 jeweils lediglich kleine räumliche Bereiche mit elektrischer Energie versorgen, kann so sichergestellt werden, dass lediglich weitere Elektrofahrzeuge 10-1, 10-2 berücksichtigt werden, die an der gleichen elektrischen Phase 15-1 - 15-3 des Energieversorgungsnetzes 12 oder dem gleichen Netz der Netzebene 7 angeschlossen sind.

Zur Bestimmung der Position kann z.B. ein GPS-Empfänger genutzt werden.

In einer weiteren Ausführungsform sieht das Verfahren vor, dass ein möglicher Abfahrtszeitpunkt 17 des Elektrofahrzeugs 2 bzw. eine für das Elektrofahrzeug 2 benötigte Reichweite 18 mit weiteren Elektrofahrzeugen 10-1 - 10-12 ausgetauscht wird. Dabei können in Abhängigkeit der möglichen Abfahrtszeitpunkte 17 des Elektrofahrzeugs 2 und der weiteren Elektrofahrzeuge 10-1 - 10-12 bzw. einer erforderlichen Reichweite 18 für das Elektrofahrzeug 2 und die weiteren Elektrofahrzeuge 10-1 - 10-12 die Elektrofahrzeuge 2, 10-1, 10-2 priorisiert werden und die entnommene Ladeleistung 13 in Abhängigkeit von der Priorisierung gesteuert werden. Dabei können hoch priorisierte Elektrofahrzeuge 2, 10-1, 10-2 mit einer höheren Ladeleistung versorgt werden als niedrig priorisierte Elektrofahrzeuge 2, 10-1, 10-2.

Insbesondere kann in einer Ausführungsform das Verfahren auch vorsehen, dass die Kommunikation mit den weiteren Elektrofahrzeugen 10-1, 10-2 über ein lokales selbstorganisierendes ad-hoc Netzwerk durchgeführt wird.

In einer weiteren Ausführungsform kann die Kommunikation auch über einen Server stattfinden.

Fig. 4 zeigt ein weiteres Ablaufdiagramm einer Ausführungsform eines erfindungsgemäßen Verfahrens.

In Fig. 4 beginnt das Verfahren mit dem Schritt S20. In dem Schritt S21 werden die ersten charakteristischen Größen 7 und die zweiten charakteristischen Größen 8 mit weiteren Elektrofahrzeugen 10-1, 10-2 ausgetauscht. Die ersten und zweiten charakteristischen Größen 7 und 8 können z.B. eine Phasenlage 14 und einen Betrag 16 der Ladespannung 4 des jeweiligen Elektrofahrzeugs 10-1, 10-2 aufweisen. Dabei kann z.B. die Phasenlage in Form eines Zeitpunkts des Nulldurchgangs der Ladespannung übermittelt werden. Zusätzlich können z.B. auch mögliche Abfahrtszeitpunkte 17 und erforderliche Reichweiten 18 zwischen den Elektrofahrzeugen 2, 10-1, 10-2 ausgetauscht werden. Ferner können weiter Daten ausgetauscht werden. Diese können z.B. die GPS-Koordinaten des jeweiligen Elektrofahrzeugs 2, 10-1, 10-2, eine Ladedringlichkeit, z.B. mit Werten von 1 (wenig dringend) bis 5 (sehr dringend) und eine aktuelle Ladeleistung, z.B. in kW, enthalten. Schließlich kann z.B. eine Fahrzeugkennung übertragen werden. So kann z.B. auch festgestellt werden, ob in einem lokalen ad-hoc Netzwerk Daten eines dritten Elektrofahrzeugs über ein als Router fungierendes Elektrofahrzeug weitergeleitet wurden.

In Schritt S22 werden die Entfernungen zu den weiteren Elektrofahrzeugen 10-1, 10-2 berechnet und die Zeitpunkte der Nulldurchgänge verglichen, um festzustellen, welche Elektrofahrzeuge 2, 10-1, 10-2 mit der gleichen elektrischen Phase 15-1 - 15-3 des Energieversorgungsnetzes 12 gekoppelt sind.

In Schritt S23 werden die Daten zu den einzelnen Elektrofahrzeugen 10-1, 10-2 in einer Tabelle abgelegt. In einer Ausführungsform ist eine zweite Tabelle hinterlegt, welche Daten darüber aufweist, welche Leistung das jeweilige Energieversorgungsnetz 12 abgeben kann.

Aus der Tabelle kann dann in Schritt S24 ermittelt werden, wie viele Elektrofahrzeuge 2, 10-1, 10-2 an der gleichen elektrischen Phase 15-1 - 15-3 angeschlossen sind. Aus dem Standort der Elektrofahrzeuge 2, 10-1 und 10-2 und der zweiten Tabelle kann bestimmt werden, welche Leistung die jeweilige elektrische Phase 15-1 - 15-3 liefern kann.

In Schritt S25 wird überprüft, ob eine Netzüberlastung droht. Ist dies nicht der Fall, wird in Schritt S29 mit dem Ladevorgang begonnen. Ist dies aber der Fall, werden in Schritt S26 die Dringlichkeiten verglichen. Hat das eigene Elektrofahrzeug 2, 10-1, 10-2 nicht die höchste Dringlichkeit, wird dessen Ladeleistung 13 in Schritt S27 reduziert und in Schritt S29 mit dem Ladevorgang begonnen. Hat das eigene Elektrofahrzeug 2, 10-1, 10-2 aber die höchste Dringlichkeit, wird direkt in Schritt S29 mit dem Ladevorgang begonnen

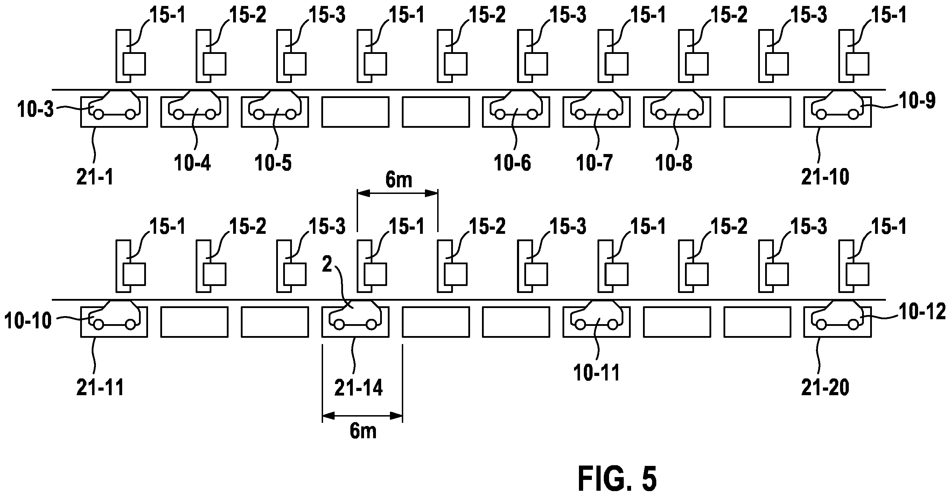

Fig. 5 zeigt eine Darstellung von Elektrofahrzeugen 2, 10-3 - 10-12 an Ladestationen 21-1 -21-20.

Die Ladestationen sind in zwei Reihen zu je 10 Ladestation 21-1 -21-10 und 21-11 -21-20 angeordnet. Der Übersichtlichkeit halber sind lediglich die ersten und letzten Ladestationen 21-1, 21-10, 21-11 und 21-20 sowie die Ladestation 21-14 mit Bezugszeichen versehen. Die Ladestationen 21-1 - 21-20 sind jeweils beginnend mit der ersten elektrischen Phase 15-1 der Reihe nach mit den elektrischen Phasen 15-1, 15-2, 15-3 gekoppelt.

In der ersten Reihe sind sieben Elektrofahrzeuge 10-3 - 10-9 angeordnet. Dabei ist jeweils eines der Elektrofahrzeuge 10-3 - 10-9 auf der ersten, der zweiten, der dritten, der sechsten, der siebten, der achten und der zehnten Ladestation 20-1, 20-2, 20-3, 20-6, 20-7, 20-8 und 20-10 angeordnet.

Wie zu erkennen ist, sind die Elektrofahrzeuge 10-3 - 10-9 in Bezug auf die elektrischen Phasen 15-1, 15-2, 15-3 nahezu gleichverteilt. Daher wird keine der elektrischen Phasen 15-1, 15-2, 15-3 mehr belastet, als die anderen.

In der zweiten Reihe sind lediglich vier Elektrofahrzeuge 10-10, 2, 10-11 und 10-12 jeweils an der ersten, vierten, siebten und zehnten Ladestation 21-11, 21-14, 21-17 und 21-20 angeordnet. Hier ist zu erkennen, wie bei einer ungünstigen Verteilung der Fahrzeuge lediglich eine einzige elektrische Phase 15-1 stark belastet wird.

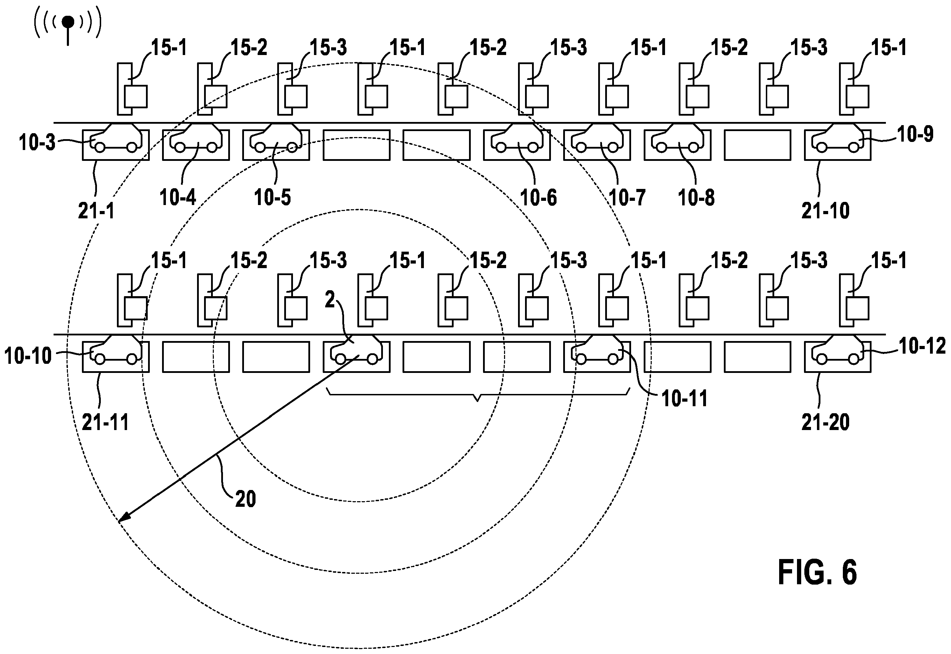

Fig. 6 zeigt eine weitere Darstellung von Elektrofahrzeugen an Ladestationen.

Die Darstellung der Fig. 6 basiert auf der Darstellung der Fig. 5. In Fig. 6 ist aber das Elektrofahrzeug 2 als Mittelpunkt eines Kreises mit dem Radius 20 dargestellt, der die Kommunikationsreichweite darstellt, innerhalb derer das Elektrofahrzeug 2 mit weiteren Elektrofahrzeugen 10-3 - 10-12 Daten austauschen kann. Es ist beispielsweise ersichtlich, dass das weitere Elektrofahrzeug 10-11 sich noch in der Kommunikationsreichweite des Elektrofahrzeugs 2 befindet. Um mit dem weiteren Elektrofahrzeug 10-12 zu kommunizieren, muss das Elektrofahrzeug 2 aber z.B. das weitere Elektrofahrzeug 10-11 als Router nutzen.

So wird es möglich, dass die Elektrofahrzeuge 2, 10-3 - 10-12 sich, wie oben beschrieben, abstimmen, und die Last auf der ersten elektrischen Phase 15-1 reduzieren, so dass keine Überlastung der ersten elektrischen Phase 15-1 erfolgt.

## Patentansprüche

1. System (1) zum Laden eines Elektrofahrzeugs (2), mit
einer in einem Elektrofahrzeug (2) angeordneten Messeinrichtung (3), welche dazu ausgebildet ist, eine Ladespannung (4) an einer Ladeschnittstelle (5) des Elektrofahrzeugs (2) zu messen;
mit einer Auswerteeinrichtung (6), welche dazu ausgebildet ist, aus der gemessene Ladespannung (4) erste charakteristische Größen (7) zu bestimmen;
einer Kommunikationseinrichtung (9), welche dazu ausgebildet ist, die ersten charakteristischen Größen (7) an weitere Elektrofahrzeuge (10-1 - 10-12) zu übermitteln und/oder von den weiteren Elektrofahrzeugen (10-1 - 10-12) zweite charakteristische Größen (8) zu Ladespannungen (4) der weiteren Elektrofahrzeuge (10-1 - 10-12) zu empfangen;
mit einer Steuereinrichtung (11), welche dazu ausgebildet ist, in Abhängigkeit von den ersten und/oder zweiten charakteristischen Größen (7, 8) die von dem Elektrofahrzeug (2) über die Ladeschnittstelle (5) aus einem Energieversorgungsnetz (12) entnommene Ladeleistung (13) zu steuern,
wobei die ersten und/oder zweiten charakteristischen Größen (7, 8) zumindest die Phasenlage (14) der Ladespannung (4) aufweisen **gekennzeichnet dadurch, dass** die Steuereinrichtung (11) dazu ausgebildet ist, basierend auf der Phasenlage (14) zu bestimmen, ob das Elektrofahrzeug (2) und mindestens eines der weiteren Elektrofahrzeuge (10-1 - 10-12) mit der gleichen elektrischen Phase (15-1 - 15-3) des Energieversorgungsnetzes (12) gekoppelt sind.

2. System nach Anspruch 1,
**dadurch gekennzeichnet,**
**dass** die Steuereinrichtung (11) dazu ausgebildet ist, die entnommene Ladeleistung (13) in Abhängigkeit von der Anzahl der mit dergleichen Phase des Energieversorgungsnetzes (12) gekoppelten weiteren Elektrofahrzeuge (10-1 - 10-12) zu steuern.

3. System nach einem der Ansprüche 1 bis 2,
**dadurch gekennzeichnet,**
**dass** die ersten und/oder zweiten charakteristischen Größen (7, 8) den Betrag (16) der Ladespannung (4) aufweisen.

4. System nach Anspruch 3,
**dadurch gekennzeichnet,**
**dass** die Steuereinrichtung (11) dazu ausgebildet ist, die entnommene Ladeleistung (13) in Abhängigkeit von dem Betrag (16) der Ladespannung (4) zu steuern.

5. System nach einem der Ansprüche 1 bis 4,
**dadurch gekennzeichnet,**
**dass** die Kommunikationseinrichtung (9) als eine kabellose Kommunikationseinrichtung (9) ausgebildet ist; und/oder
**dass** die Kommunikationseinrichtung (9) dazu ausgebildet ist eine lokale ad-hoc Kommunikation zwischen dem Elektrofahrzeug (2) und weiteren Elektrofahrzeugen (10-1 - 10-12) aufzubauen; und/oder
**dass** die Kommunikationseinrichtung (9) dazu ausgebildet ist eine Server-basierte Kommunikation zwischen dem Elektrofahrzeug (2) und weiteren Elektrofahrzeugen (10-1 - 10-12) aufzubauen.

6. System nach einem der Ansprüche 1 bis 5,
**dadurch gekennzeichnet,**
**dass** die Steuereinrichtung (11) dazu ausgebildet ist, einen möglichen Abfahrtszeitpunkt (17) des Elektrofahrzeugs (2) und/oder eine für das Elektrofahrzeug (2) benötigte Reichweite (18) über die Kommunikationseinrichtung (9) an weitere Elektrofahrzeuge (10-1 - 10-12) zu übermitteln und über die Kommunikationseinrichtung (9) mögliche Abfahrtszeitpunkte (17) der weiteren Elektrofahrzeuge (10-1 - 10-12) und/oder für die weiteren Elektrofahrzeuge (10-1 - 10-12) benötigte Reichweiten (18) zu empfangen; und
**dass** die Steuereinrichtung (11) dazu ausgebildet ist, in Abhängigkeit der möglichen Abfahrtszeitpunkte (17) des Elektrofahrzeugs (2) und der weiteren Elektrofahrzeuge (10-1 - 10-12) und/oder einer erforderlichen Reichweite (18) für das Elektrofahrzeug (2) und die weiteren Elektrofahrzeuge (10-1 - 10-12) eine Priorisierung der Elektrofahrzeuge durchzuführen und die entnommene Ladeleistung (13) in Abhängigkeit von der Priorisierung zu steuern.

7. System nach einem der Ansprüche 1 bis 6,
**dadurch gekennzeichnet,**
**dass** die Steuereinrichtung (11) dazu ausgebildet ist, eine Position des Elektrofahrzeugs (2) zu bestimmen und die ersten und/oder zweiten charakteristischen Größen (7, 8) über die Kommunikationseinrichtung (9) lediglich mit weiteren Elektrofahrzeugen (10-1 - 10-12) auszutauschen, die sich innerhalb eines vorgegebenen Radius (20) um das Elektrofahrzeug (2) befinden.

8. Elektrofahrzeug (2), mit
mit einer Ladeschnittstelle (5); und
einer im Elektrofahrzeug (2) angeordneten Ladevorrichtung, welche ein System nach einem der Ansprüche 1 bis 7 aufweist.

9. Verfahren zum Laden eines Elektrofahrzeugs (2), mit den Schritten:
Messen (S1) einer Ladespannung (4) an einer Ladeschnittstelle (5) des Elektrofahrzeugs (2);
Bestimmen (S2) erster charakteristischer Größen (7) aus der gemessenen Ladespannung (4);
Übermitteln (S3) der ersten charakteristischen Größen (7) an weitere Elektrofahrzeuge (10-1 - 10-12); und/oder Empfangen von zweiten charakteristischen Größen (8) zu Ladespannungen (4) der weiteren Elektrofahrzeuge (10-1 - 10-12) von den weiteren Elektrofahrzeugen (10-1 - 10-12);
Steuern (S4) der von dem Elektrofahrzeug (2) über die Ladeschnittstelle (5) aus einem Energieversorgungsnetz (12) entnommene Ladeleistung (13) in Abhängigkeit von den ersten und/oder zweiten charakteristischen Größen (7, 8).
wobei die ersten und/oder zweiten charakteristischen Größen (7, 8) zumindest die Phasenlage (14) der Ladespannung (4) aufweisen; und
**gekennzeichnet dadurch, dass** beim Steuern (S4) basierend auf der Phasenlage (14) bestimmt wird, ob das Elektrofahrzeug (2) und mindestens eines der weiteren Elektrofahrzeuge (10-1 - 10-12) mit der gleichen elektrischen Phase (15-1 - 15-3) des Energieversorgungsnetzes (12) gekoppelt sind;

10. Verfahren nach Anspruch 9, **dadurch gekennzeichnet, dass** die entnommene Ladeleistung (13) in Abhängigkeit von der Anzahl der mit der gleichen Phase des Energieversorgungsnetzes (12) gekoppelten weiteren Elektrofahrzeuge (10-1 - 10-12) gesteuert wird.

11. Verfahren nach einem der Ansprüche 9 und 10,
wobei die ersten und/oder zweiten charakteristischen Größen (7, 8) den Betrag (16) der Ladespannung (4) aufweisen; und
wobei die entnommene Ladeleistung (13) in Abhängigkeit von dem Betrag (16) der Ladespannung (4) gesteuert wird.

12. Verfahren nach einem der Ansprüche 9 bis 11,
wobei ferner ein möglicher Abfahrtszeitpunkt des Elektrofahrzeugs (2) und/oder eine für das Elektrofahrzeug (2) benötigte Reichweite über die Kommunikationseinrichtung (9) an weitere Elektrofahrzeuge (10-1 - 10-12) übermittelt wird; und/oder
wobei mögliche Abfahrtszeitpunkte der weiteren Elektrofahrzeuge (10-1 - 10-12) und/oder für die weiteren Elektrofahrzeuge (10-1 - 10-12) benötigte Reichweiten empfangen werden; und
wobei in Abhängigkeit der möglichen Abfahrtszeitpunkte des Elektrofahrzeugs (2) und der weiteren Elektrofahrzeuge (10-1 - 10-12) und/oder einer erforderlichen Reichweite für das Elektrofahrzeug (2) und die weiteren Elektrofahrzeuge (10-1 - 10-12) die Elektrofahrzeuge priorisiert werden und die entnommene Ladeleistung (13) in Abhängigkeit von der Priorisierung gesteuert wird.

13. Verfahren nach einem der Ansprüche 9 bis 12,
wobei eine Position des Elektrofahrzeugs (2) bestimmt wird und die charakteristischen Größen lediglich mit weiteren Elektrofahrzeugen (10-1 - 10-12) ausgetauscht werden, die sich innerhalb eines vorgegebenen Radius (20) um das Elektrofahrzeug (2) befinden.

## Claims

1. System (1) for charging an electric vehicle (2), having
a measuring device (3) which is arranged in an electric vehicle (2) and is designed to measure a charge voltage (4) at a charging interface (5) of the electric vehicle (2);
having an evaluation device (6) which is designed to determine first characteristic variables (7) from the measured charge voltage (4);
a communication device (9) which is designed to transfer the first characteristic variables (7) to further electric vehicles (10-1 - 10-12) and/or to receive, from the further electric vehicles (10-1 - 10-12), second characteristic variables (8) relating to charge voltages (4) of the further electric vehicles (10-1 - 10-12);
having a control device (11) which is designed to control, in accordance with the first and/or second characteristic variables (7, 8), the charge power (13) which is extracted by the electric vehicle (2) from a power supply grid (12) via the charging interface (5),
wherein
the first and/or second characteristic variables (7, 8) have at least the phase position (14) of the charge voltage (4), **characterized in that** the control device (11) is designed to determine, on the basis of the phase position (14), whether the electric vehicle (2) and at least one of the further electric vehicles (10-1 - 10-12) are coupled to the same electric phase (15-1 - 15-3) of the power supply grid (12).

2. System according to Claim 1,
**characterized**
**in that** the control device (11) is designed to control the extracted charge power (13) in accordance with the number of further electric vehicles (10-1 - 10-12) which are coupled to the same phase of the power supply grid (12).

3. System according to one of Claims 1 to 2,
**characterized**
**in that** the first and/or second characteristic variables (7, 8) have the absolute value (16) of the charge voltage (4).

4. System according to Claim 3,
**characterized**
**in that** the control device (11) is designed to control the extracted charge power (13) in accordance with the absolute value (16) of the charge voltage (4).

5. System according to one of Claims 1 to 4,
**characterized**
**in that** the communication device (9) is embodied as a cableless communication device (9); and/or
**in that** the communication device (9) is designed to set up a local ad hoc communication between the electric vehicle (2) and further electric vehicles (10-1 - 10-12); and/or
**in that** the communication device (9) is designed to set up a server-based communication between the electric vehicle (2) and further electric vehicles (10-1 - 10-12).

6. System according to one of Claims 1 to 5,
**characterized**
**in that** the control device (11) is designed to transfer a possible departure time (17) of the electric vehicle (2) and/or a range (18) required for the electric vehicle (2) to further electric vehicles (10-1 - 10-12) via the communication device (9), and to receive possible departure times (17) of the further electric vehicles (10-1 - 10-12) and/or ranges (18) required for the further electric vehicles (10-1 - 10-12) via the communication device (9); and
**in that** the control device (11) is designed to carry out prioritization of the electric vehicles in accordance with the possible departure times (17) of the electric vehicle (2) and the further electric vehicles (10-1 - 10-12) and/or a necessary range (18) for the electric vehicle (2) and the further electric vehicles (10-1 - 10-12) and to control the extracted charge power (13) in accordance with the prioritization.

7. System according to one of Claims 1 to 6,
**characterized**
**in that** the control device (11) is designed to determine a position of the electric vehicle (2) and to exchange the first and/or second characteristic variables (7, 8), via the communication device (9), only with further electric vehicles (10-1 - 10-12) which are located within a predefined radius (20) around the electric vehicle (2).

8. Electric vehicle (2) having
a charging interface (5); and
a charging device which is arranged in the electric vehicle (2) and has a system according to one of Claims 1 to 7.

9. Method for charging an electric vehicle (2), having the steps:
measuring (S1) a charge voltage (4) at a charging interface (5) of the electric vehicle (2);
determining (S2) first characteristic variables (7) from the measured charge voltage (4);
transferring (S3) the first characteristic variables (7) to further electric vehicles (10-1 - 10-12); and/or receiving second characteristic variables (8) relating to charging voltages (4) of the further electric vehicles (10-1 - 10-12) from the further electric vehicles (10-1 - 10-12);
controlling (S4), in accordance with the first and/or second characteristic variables (7, 8), the charge power (13) which is extracted by the electric vehicle (2) from a power supply grid (12) via the charging interface (5),
wherein the first and/or second characteristic variables (7, 8) have at least the phase position (14) of the charge voltage (4); and
**characterized in that**
when control (S4) is being carried out on the basis of the phase position (14), it is determined whether the electric vehicle (2) and at least one of the further electric vehicles (10-1 - 10-12) are coupled to the same electric phase (15-1 - 15-3) of the power supply grid (12).

10. Method according to Claim 9, **characterized in that** the extracted charge power (13) is controlled in accordance with the number of further electric vehicles (10-1 - 10-12) which are coupled to the same phase of the power supply grid (12).

11. Method according to one of Claims 9 and 10,
wherein the first and/or second characteristic variables (7, 8) have the same absolute value (16) of the charge voltage (4); and
wherein the extracted charge power (13) is controlled in accordance with the absolute value (16) of the charge voltage (4).

12. Method according to one of Claims 9 to 11,
wherein in addition a possible departure time of the electric vehicle (2) and/or a range required for the electric vehicle (2) are/is transferred to further electric vehicles (10-1 - 10-12) via the communication device (9); and/or
wherein possible departure times of the further electric vehicles (10-1 - 10-12) and/or ranges required for the further electric vehicles (10-1 - 10-12) are received;
and
wherein the electric vehicles are prioritized in accordance with the possible departure times of the electric vehicle (2) and of the further electric vehicles(10-1 - 10-12) and/or of a necessary range for the electric vehicle (2) and the further electric vehicles (10-1 - 10-12), and the extracted charge power (13) is controlled in accordance with the prioritization.

13. Method according to one of Claims 9 to 12,
wherein a position of the electric vehicle (2) is determined, and the characteristic variables are exchanged only with further electric vehicles (10-1 - 10-12) which are located within a predefined radius (20) around the electric vehicle (2).

## Revendications

1. Système (1) pour charger un véhicule électrique (2), comprenant
un dispositif de mesure (3) disposé dans le véhicule électrique (2), lequel est conçu pour mesurer une tension de charge (4) au niveau d'une interface de charge (5) du véhicule électrique (2) ;
comprenant un dispositif d'interprétation (6), qui est conçu pour déterminer des premières grandeurs caractéristiques (7) à partir de la tension de charge (4) mesurée ;
un dispositif de communication (9), qui est conçu pour communiquer les premières grandeurs caractéristiques (7) à d'autres véhicules électriques (10-1 - 10-12) et/ou recevoir de la part des autres véhicules électriques (10-1 - 10-12) des deuxièmes grandeurs caractéristiques (8) à propos des tensions de charge (4) des autres véhicules électriques (10-1 - 10-12) ;
comprenant un dispositif de commande (11), qui est conçu pour commander la puissance de charge (13) prélevée d'un réseau d'alimentation en énergie (12) par le véhicule électrique (2) par le biais de l'interface de charge (5) en fonction des premières et/ou des deuxièmes grandeurs caractéristiques (7, 8),
les premières et/ou les deuxièmes grandeurs caractéristiques (7, 8) présentant au moins la position de phase (14) de la tension de charge (4), **caractérisé en ce que** le dispositif de commande (11) est conçu pour déterminer, en se basant sur la position de phase (14), si le véhicule électrique (2) et au moins l'un des autres véhicules électriques (10-1 - 10-12) sont connectés à la même phase électrique (15-1 - 15-3) du réseau d'alimentation en énergie (12).

2. Système selon la revendication 1, **caractérisé en ce que** le dispositif de commande (11) est conçu pour commander la puissance de charge (13) prélevée en fonction du nombre d'autres véhicules électriques (10-1 - 10-12) qui sont connectés à la même phase du réseau d'alimentation en énergie (12).

3. Système selon l'une des revendications 1 et 2, **caractérisé en ce que** les premières et/ou les deuxièmes grandeurs caractéristiques (7, 8) présentent la valeur absolue (16) de la tension de charge (4).

4. Système selon la revendication 3, **caractérisé en ce que** le dispositif de commande (11) est conçu pour commander la puissance de charge (13) prélevée en fonction de la valeur absolue (16) de la tension de charge (4) .

5. Système selon l'une des revendications 1 à 4, **caractérisé en ce**
**que** le dispositif de communication (9) est réalisé sous la forme d'un dispositif de communication (9) sans fil ; et/ou
**que** le dispositif de communication (9) est conçu pour établir une communication ad-hoc locale entre le véhicule électrique (2) et les autres véhicules électriques (10-1 - 10-12) ; et/ou
**que** le dispositif de communication (9) est conçu pour établir une communication basée sur serveur entre le véhicule électrique (2) et les autres véhicules électriques (10-1 - 10-12).

6. Système selon l'une des revendications 1 à 5, **caractérisé en ce**
**que** le dispositif de commande (11) est conçu pour communiquer aux autres véhicules électriques (10-1 - 10-12), par le biais du dispositif de communication (9), un instant de départ possible (17) du véhicule électrique (2) et/ou une portée (18) nécessaire pour le véhicule électrique (2) et pour recevoir, par le biais du dispositif de communication (9), les instants de départ possibles (17) des autres véhicules électriques (10-1 - 10-12) et/ou les portées (18) nécessaires pour les autres véhicules électriques (10-1 - 10-12) ; et
**que** le dispositif de commande (11) est conçu pour, en fonction des instants de départ possibles (17) du véhicule électrique (2) et des autres véhicules électriques (10-1 - 10-12) et/ou d'une portée (18) nécessaire pour le véhicule électrique (2) et les autres véhicules électriques (10-1 - 10-12), effectuer une définition des priorités des véhicules électriques et commander la puissance de charge (13) prélevée en fonction des priorités définies.

7. Système selon l'une des revendications 1 à 6, **caractérisé en ce**
**que** le dispositif de commande (11) est conçu pour déterminer une position du véhicule électrique (2) et échanger les premières et/ou les deuxièmes grandeurs caractéristiques (7, 8) par le biais du dispositif de communication (9) uniquement avec les autres véhicules électriques (10-1 - 10-12) qui se trouvent au sein d'un rayon (20) prédéfini autour du véhicule électrique (2).

8. Véhicule électrique (2), comprenant une interface de charge (5) ; et
un arrangement de charge disposé dans le véhicule électrique (2), lequel possède un système selon l'une des revendications 1 à 7.

9. Procédé pour charger un véhicule électrique (2), comprenant les étapes suivantes :
mesure (S1) d'une tension de charge (4) au niveau d'une interface de charge (5) du véhicule électrique (2) ;
détermination (S2) de premières grandeurs caractéristiques (7) à partir de la tension de charge (4) mesurée ;
communication (S3) des premières grandeurs caractéristiques (7) à d'autres véhicules électriques (10-1 - 10-12) et/ou réception de la part des autres véhicules électriques (10-1 - 10-12) de deuxièmes grandeurs caractéristiques (8) à propos des tensions de charge (4) des autres véhicules électriques (10-1 - 10-12) ;
commande (S4) de la puissance de charge (13) prélevée d'un réseau d'alimentation en énergie (12) par le véhicule électrique (2) par le biais de l'interface de charge (5) en fonction des premières et/ou des deuxièmes grandeurs caractéristiques (7, 8),
les premières et/ou les deuxièmes grandeurs caractéristiques (7, 8) présentant au moins la position de phase (14) de la tension de charge (4) ; et
**caractérisé en ce que**
lors de la commande (S4) basée sur la position de phase (14), il est déterminé si le véhicule électrique (2) et au moins l'un des autres véhicules électriques (10-1 - 10-12) sont connectés à la même phase électrique (15-1 - 15-3) du réseau d'alimentation en énergie (12).

10. Procédé selon la revendication 9, **caractérisé en ce que** la puissance de charge (13) prélevée est commandée en fonction du nombre d'autres véhicules électriques (10-1 - 10-12) qui sont connectés à la même phase du réseau d'alimentation en énergie (12).

11. Procédé selon l'une des revendications 9 et 10, les premières et/ou les deuxièmes grandeurs caractéristiques (7, 8) présentant la valeur absolue (16) de la tension de charge (4) ; et
la puissance de charge (13) prélevée étant commandée en fonction de la valeur absolue (16) de la tension de charge (4) .

12. Procédé selon l'une des revendications 9 à 11,
un instant de départ possible du véhicule électrique (2) et/ou une portée nécessaire pour le véhicule électrique (2) étant en outre communiqués aux autres véhicules électriques (10-1 - 10-12) par le biais du dispositif de communication (9) ; et/ou
les instants de départ possibles des autres véhicules électriques (10-1 - 10-12) et/ou les portées nécessaires pour les autres véhicules électriques (10-1 - 10-12) étant reçus ; et
une définition des priorités des véhicules électriques étant effectuée en fonction des instants de départ possibles du véhicule électrique (2) et des autres véhicules électriques (10-1 - 10-12) et/ou d'une portée nécessaire pour le véhicule électrique (2) et les autres véhicules électriques (10-1 - 10-12), et la puissance de charge (13) prélevée étant commandée en fonction des priorités définies.

13. Procédé selon l'une des revendications 9 à 12,
une position du véhicule électrique (2) étant déterminée et les grandeurs caractéristiques étant échangées uniquement avec les autres véhicules électriques (10-1 - 10-12) qui se trouvent au sein d'un rayon (20) prédéfini autour du véhicule électrique (2).
